# FASCICULE DE BREVET EUROPEEN

(11) **EP 0 272 968 B1**
(45) Date de publication et mention de la délivrance du brevet: **10.03.1993**
(21) Numéro de dépôt: 87402734.5
(22) Date de dépôt: 02.12.1987
(51) Int. Cl.: A61K 9/22, A61K 7/18

(54) **Produit d'hygiène, notamment pour l'entretien de la denture des chiens**
Pflegemittel, insbesondere zur Pflege des Gebisses von Hunden
Hygienic composition, especially for the care of dogs' teeth

(30) Priorité: 05.12.1986 FR 8617053
(43) Date de publication de la demande: 29.06.1988
(73) Titulaire: Boyer, Danielle, F-92000 Boulogne Hauts de Seine (FR)
(72) Inventeur: Boyer, Danielle, F-92000 Boulogne Hauts de Seine (FR)
(74) Mandataire: Petit, Hélène

(56) Documents cités:
- FR-A- 2 144 599
- CHEMICAL ABSTRACTS, vol. 90, 1979, Columbus, Ohio, US; J.L.McDONALD Jr. et al.: "Influence of fluoride upon plaque and gingivitis in the beagle dog" p. 36, no. 97508r

## Description

La présente invention est relative à un produit destiné à entretenir la denture d'un chien ou d'un autre animal domestique du même genre, en fournissant à celui-ci des doses contrôlées d'éléments ayant une activité déterminée, permettant de lutter efficacement en particulier contre les caries des dents, contre la flore microbienne se développant dans la couche dure dite plaque dentaire tapissant la paroi antérieure des dents, et contre le tartre ou les dépôts calcaires incrustés entre les dents.

On sait que l'hygiène dentaire des chiens ou autres animaux domestiques analogues est souvent déficiente en raison de l'impossibilité de réaliser un brossage efficace de leurs dents avec des produits dentifrices adaptés, de façon comparable à l'usage qui en est fait par des personnes humaines.

La présente invention concerne un produit d'hygiène, propre à être mastiqué, rongé ou léché par le chien, afin de lui apporter sous une forme acceptable par celui-ci les éléments nécessaires à une hygiène dentaire adéquate.

On connait déjà par le document FR-A-2 144 599 un procédé d'administration par voie orale de médicaments, vitamines ou analogues à des animaux, qui consiste à incorporer ladite matière à un matériau poreux que l'animal va ensuite lécher ou croquer.

Chemical Abstracts, vol. 90, 1979, page 36, n^{o} 97508 r, citant J.L. Mc Donald Jr et al, J. Dent. Res. 1978, 57 (9-10), 899-902, mentionne par ailleurs des essais topiques réalisés chez le chien pour déterminer l'efficacité du fluor sur la plaque dentaire et la gingivite. On constate un effet curatif mais non préventif.

Le produit d'hygiène de l'invention comporte un support incorporant ou ayant absorbé divers éléments ou principes actifs hydrosolubles, ledit support étant réalisé en une matière digestible naturelle ou synthétique propre à être rongée,mastiquée ou léchée par l'animal.

Selon la caractéristique de l'invention, les éléments actifs absorbés par le support sont choisis, ensemble ou séparément, parmi des agents anti-carie tels que des sels fluorés, des agents anti-microbiens pour lutter contre la flore bactérienne développée dans la plaque dentaire et des agents anti-tartre.

Avantageusement, les éléments actifs peuvent être également associés à des agents de saveur ou des arômes, favorisant l'appétence et l'intérêt de l'animal pour le produit.

Dans un mode de réalisation particulier du produit considéré, les éléments actifs sont de préférence constitués, à titre d'agents anti-carie, par des sels fluorés tels que le fluorure de sodium, le monofluorophosphate de sodium ou d'autres sels fluorés seuls ou en mélange, à titre d'agent anti-microbien , par du bromchlorophène, à titre d'agent anti-tartre, par du benzoate de sodium.

Selon la présente invention, le produit d'hygiène propre à être mastiqué par le chien, contient les proportions suivantes d'éléments actifs, entre 0,007 et 0,060 % en ions fluor, entre 0,005 et 0,045 % en agents anti-microbiens tels que le bromchlorophène, entre 0,060 et 0,540 % en agents anti-tartre.

Selon une autre caractéristique du produit selon l'invention, le support est constitué par un fragment ou une lanière de cuir de boeuf, convenablement découpé. En variante, le support est formé par du tendon de cou de boeuf ou par tout autre matériau relativement souple mais résistant, le cas échéant digestible, que l'animal peut mastiquer ou ronger à sa guise en provoquant la libération des éléments actifs qu'il incorpore, par un effet mécanique répété en milieu salivaire, comparable à un brossage efficace.

Pour réaliser le produit d'hygiène selon l'invention, on procède de préférence de la façon suivante :

On immerge d'abord le support dans une solution aqueuse concentrée en éléments actifs, choisis parmi des agents anti-carie tels que des sels fluorés, des agents antimicrobiens propres à lutter contre la flore bactérienne développée dans la plaque dentaire et des agents anti-tartre, en proportion déterminée pendant une durée approximative de 48 heures, de manière à imprégner ou faire absorber ces éléments sur le support, puis on sèche en étuve à environ 37° C pendant 24 heures ce support pour provoquer l'évaporation de l'eau et on met en forme le support, par exemple on le roulant ou en le conformant selon un profil rappelant un os à ronger ou tout autre objet susceptible d'intéresser l'animal, tel par exemple qu'une côtelette, une chaussure ou un petit animal, etc... Le support est immergé dans un volume de la solution présentant un rapport de 10 à 1 en poids avec le support.

Dans le cas où le support est constitué par des lanières en peau, celles-ci sont découpées selon des bandes allongées de poids variable selon la taille du produit à réaliser, la peau étant généralement adaptée à absorber les éléments actifs contenus dans la solution en quantité sensiblement égale à environ une fois et demi leur poids de solution

Les quantités d'éléments actifs dans le support sont ainsi exactement ajustées de manière à ne présenter aucun risque pour l'animal même pour une utilisation quotidienne maximale, correspondant à une mastication prolongée et à l'ingestion du produit.

On donne ci-après un exemple particulier de réalisation du produit d'hygiène selon l'invention.

Dans un premier temps on prépare une série de lanières de peaux découpées sous forme allongée dans une pièce en cuir de boeuf, ces lanières présentant chacune un poids d'environ 10 grammes à 10 % près.

Ces lanières sont dans un second temps immergées dans une solution convenablement préparée contenant pour environ un litre de solution 0,30 g de fluorure de sodium, 1,20 g de benzoate de sodium, 0,10 g de bromchlorophène et un arôme en représentant environ 8,40 g. Le complément, soit 990,00 G, est réalisé par de l'eau pure. Les lanières de peaux immergées dans la solution sont progressivement imprégnées par les éléments actifs contenus dans celle-ci jusqu'à ce que ces peaux s'imbibent d'environ une fois et demi leur poids de solution.

Les peaux humides sont ensuite séchées en étuve à environ 37° C, puis conformées selon un profil convenable rappelant une forme d'os, que l'animal pourra mastiquer et ronger à sa guise en absorbant progressivement les éléments actifs précités qui assureront une hygiène convenable de sa denture.

L'os ainsi obtenue contient pour un poids de 10 g, 0,020 % d'ions fluor, 0,015 % de bromchlorophène et 0,180 % de benzoate de sodium.

Bien entendu il va de soi que l'invention ne se limite pas à l'exemple plus spécialement envisagé ci-dessus; elle embrasse au contraire toutes les variantes notamment en relation avec la nature des éléments actifs incorporés au support et aux proportions relatives de ces éléments.

En particulier on peut préparer selon la présente invention des os ou autres produits à mastiquer et ronger d'une taille et d'un poids adapté à la taille des chiens auxquels ils seront destinés.

Les produits de l'invention d'un poids de 10 g sont normalement destinés aux chiens de petite taille. Des produits d'environ 30 g contenant une teneur convenable plus élevée en éléments actifs, peuvent être préparés à l'invention de chiens de grande taille.

## Revendications

1. Produit d'hygiène, notamment pour l'entretien de la denture d'un chien, comportant un support incorporant ou ayant absorbé divers éléments ou principes actifs hydrosolubles, ce support étant réalisé en une matière digestible naturelle ou synthétique propre à être rongée, mastiquée ou léchée par l'animal, caractérisé en ce que les éléments actifs sont choisis ensemble ou séparément, parmi des agents anti-carie tels que des sels fluorés, des agents antimicrobiens propres à lutter contre la flore bactérienne développée dans la plaque dentaire et des agents anti-tartre.

2. Produit d'hygiène selon la revendication 1, caractérisé en ce que les agents actifs sont associés à d'autres agents accessoires notamment de saveur ou des arômes.

3. Produit d'hygiène selon la revendication 1, caractérisé en ce que l'élément actif constituant l'agent anti-carie est un fluorure de sodium, ou un monofluorophosphate de sodium, ou un autre sel fluoré, ou un mélange de ceux-ci, et en ce que la teneur en ions fluor du produit d'hygiène est comprise entre 0,07 et 0,060 %.

4. Produit d'hygiène selon la revendication 1, caractérisé en ce que l'élément actif constituant l'agent anti-microbien est du bromchlorophène entrant dans le produit dans une proportion comprise entre 0,005 et 0,045 %.

5. Produit d'hygiène selon la revendication 1, caractérisé en ce que l'élément actif constituant l'agent anti-tartre est constitué par du benzoate de sodium entrant dans la composition dans une proportion comprise entre 0,060 et 0,540 %.

6. Produit d'hygiène selon l'une quelconque des revendications 1 à 5, caractérisé en ce que le support est constitué par des fragments de peau ou des lanières de cuir de boeuf convenablement découpées et roulées en forme d'os d'un poids allant de préférence de 10 g à 40 g.

7. Produit d'hygiène selon l'une quelconque des revendications 1 à 6, caractérisé en ce que le support est formé par du tendon de cou de boeuf ou par tout autre matériau analogue souple et résistant.

8. Procédé de préparation selon l'une quelconque des revendications 1 à 7, caractérisé en ce qu'on découpe des lanières de peaux, on imprègne ces lanières par une solution aqueuse concentrée en éléments actifs pendant une durée approximative de 48 heures, les lanières étant dans le rapport en poids de 1 à 10 avec la solution, la solution aqueuse contenant comme éléments actifs des agents anti-carie tels que des sels fluorés, des agents antimicrobiens propres à lutter contre la flore bactérienne développée dans la plaque dentaire et des agents anti-tartre, on sèche ensuite en étuve à environ 37°C pendant 24 heures pour évaporer l'eau de la solution, et on met en forme ces lanières pour constituer un objet propre à être rongé, mastiqué ou léché par le chien.

## Claims

1. A hygiene product, in particular for maintaining the teeth of a dog, comprising a support incorporating or having absorbed various elements or hydrosoluble active principles, this support being made of a natural or synthetic digestible material, suited to being gnawed, chewed or licked by the animal, characterised in that the active elements are selected together or separately from anti-caries agents such as fluorous salts, antimicrobial agents suited to combatting the bacterial flora developed in the dental plaque, and anti-tartar agents.

2. A hygiene product according to Claim 1, characterised in that the active agents are associated with other accessory agents, in particular flavours or aromas.

3. A hygiene product according to Claim 1, characterised in that the active element constituting the anti-caries agent is a sodium fluoride, or a sodium monofluorophosphate, or another fluorous salt, or a mixture thereof, and in that the amount of fluorine ions of the hygiene product is comprised between 0.007 and 0.060 %.

4. A hygiene product according to Claim 1, characterised in that the active element constituting the antimicrobial agent is bromochlorophene, entering into the product in a proportion comprised between 0.005 and 0.045 %.

5. A hygiene product according to Claim 1, characterised in that the active element constituting the anti-tartar agent is constituted by sodium benzoate entering into the composition in a proportion comprised between 0.060 and 0.540 %.

6. A hygiene product according to any one of Claims 1 to 5, characterised in that the support is constituted by fragments of skin or thin strips of oxhide suitably cut and rolled in the shape of a bone, preferaby having a weight of between 10 g and 40 g.

7. A hygiene product according to any one of Claims 1 to 6, characterised in that the support is formed by ox neck tendon or by any other similar flexible and resistant material.

8. A preparation process according to any one of Claims 1 to 7, characterised in that thin strips of skin are cut, these thin strips are impregnated with a concentrated aqueous solution of active elements for a period of approximately 48 hours, the thin strips being in the weight ratio of 1 to 10 with the solution, the aqueous solution containing as active elements anti-caries agents such as fluorous salts, anitmicrobial agents suited to combatting the bacterial flora developed in dental plaque, and anti-tartar agents, then drying is carried out in an oven at approximately 37° C for 24 hours to evaporate the water of the solution, and these thin strips are shaped to constitute an object suited to being gnawed, chewed or licked by the dog.

## Patentansprüche

1. Hygieneartikel, vor allem für die Pflege der Zähne eines Hundes, bestehend aus einem Träger, in den verschiedene aktive wasserlösliche Elemente oder Wirkstoffe eingearbeitet oder absorbiert sind, wobei der Träger aus einem verdaulichen natürlichen oder synthetischen Material, das von dem Tier benagt, gekaut oder abgeschleckt werden kann, hergestellt ist, dadurch gekennzeichnet, daß die aktiven Elemente/Wirkstoffe zusammen oder getrennt unter Anti-Kariesmitteln wie Fluorsalzen, antimikrobiellen Mitteln, die die im Zahnbelag entwickelte Bakterienflora bekämpfen können, und Anti-Zahnsteinmitteln ausgewählt sind.

2. Hygieneartikel nach Anspruch 1, dadurch gekennzeichnet, daß die Wirkstoffe mit anderen Hilfsstoffen, vor allem mit Geschmacks- oder Aromastoffen, kombiniert sind.

3. Hygieneartikel nach Anspruch 1, dadurch gekennzeichnet, daß das aktive Element, welches das Anti-Kariesmittel ausmacht, ein Natriumfluorid oder ein Natriummonofluorphosphat oder ein anderes Fluorsalz oder ein Gemisch aus diesen ist und daß der Gehalt an Fluorionen im Hygieneartikel 0,007 bis 0,060% ausmacht.

4. Hygieneartikel nach Anspruch 1, dadurch gekennzeichnet, daß das aktive Element, welches das antimikrobielle Mittel ausmacht, Bromchlorophen ist, das im Produkt in einem Anteil von 0,005 bis 0,045% enthalten ist.

5. Hygieneartikel nach Anspruch 1, dadurch gekennzeichnet, daß das aktive Element, welches das Anti-Zahnsteinmittel ausmacht, aus Natriumbenzoat besteht, das im Produkt in einem Anteil von 0,060 bis 0,540% vorhanden ist.

6. Hygieneartikel nach einem der Ansprüche 1 bis 5, dadurch gekennzeichnet, daß der Träger aus Hautstücken oder Lederriemen vom Rind besteht, die zweckmäßigerweise zugeschnitten und in Form eines Knochens mit einem Gewicht von vorzugsweise 10 bis 40 g zusammengerollt sind.

7. Hygieneartikel nach einem der Ansprüche 1 bis 6, dadurch gekennzeichnet, daß der Träger aus der Halssehne des Rindes oder aus einem beliebigen anderen analogen biegsamen und resistenten Material besteht.

8. Verfahren zur Herstellung (des Artikels) nach einem der Ansprüche 1 bis 7, dadurch gekennzeichnet, daß man Hautriemen zuschneidet, diese Riemen mit einer wäßrigen konzentrierten Lösung der aktiven Elemente während etwa 48 h imprägniert, wobei das Gewichtsverhältnis von Riemen zu Lösung 1 bis 10 beträgt, die wäßrige Lösung als aktive Elemente Anti-Kariesmittel wie Fluorsalze, antimikrobielle Mittel, die die im Zahnbelag entwickelte Bakterienflora bekämpfen können, und Anti-Zahnsteinmittel enthält, daß man anschließend im Ofen bei etwa 37°C während 24 h trocknet, um das Wasser der Lösung zu verdampfen, und die Riemen zu einem Gegenstand verformt, der vom Hund benagt, gekaut oder abgeschleckt werden kann.
